# EUROPEAN PATENT APPLICATION

(11) **EP 1 447 035 A1**
(43) Date of publication of application: **18.08.2004**
(21) Application number: 03250940.8
(22) Date of filing: 15.02.2003
(51) Int. Cl.: A47J 37/07, F24C 1/04, A47J 37/06

(54) **Improvements in and relating to cooking devices**

(71) Applicant: Salton Europe Limited, Manchester M35 0HS (GB)
(72) Inventor: Williams, Mike, Manchester M35 0HS (GB)
(74) Representative: Parkinson, Neil Scott

(57) **Abstract**

A cooking device (100) described. The device includes a one grill plate (110), an electric heater (116) arranged to heat the grill plate, and a gas heater also arranged to heat the grill plate.

## Description

### Field of the Invention

The present invention relates to a cooking device, and in particular a cooking device incorporating a grill plate.

### Background to the Invention

Portable electric grills are well known. A typical example has two grill plate assemblies hinged together in clam shell arrangement for use on a table or counter top. The user places food stuffs on the lower grill plate and then closes the upper grill plate down upon it, such that the foodstuff is cooked simultaneously on both sides. The lower grill plate may be inclined so as to facilitate grease run off from the food. Such a grill includes a power cord for plugging into a conventional electrical outlet in order to supply power to the upper and lower grill plates.

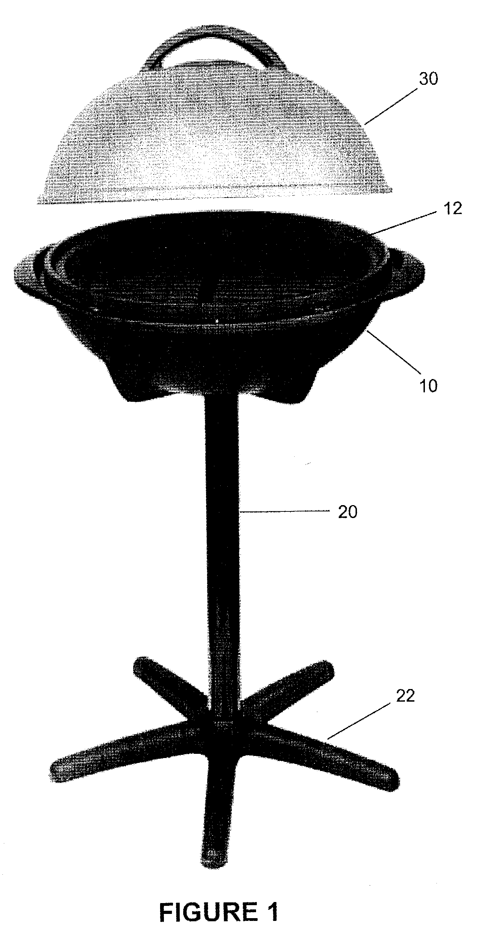

Another type of grill (also known as a gridiron, a griddle or a barbeque) is illustrated in Figure 1. The grill 10 comprises an electrically heated grill plate 12. Food stuffs are placed on the grill plate for cooking. The grill 10 may be used both indoors and outdoors. It has a removable stand 20 (with stabilisation feet 22) to allow the grill to be placed at a convenient height for cooking. Alternatively, the grill 10 could be placed on a tabletop or any other suitable surface. A lid 30 may be used to cover the grill plate, to maintain heat and protect foodstuffs on the grill from wind and rain.

The grill 10 includes a power cord (not shown) that plugs into a conventional electric outlet in order to supply power to an electric heater to heat the grill plate 12. Electrical power is typically cheap and convenient. It allows the device to be plugged into any convenient electrical supply outlet, and does not require the use of gas canisters which must be periodically replaced. However, it does have the disadvantage that the grill 10 must be placed near an electrical supply outlet.

It is an aim of embodiments of the present invention to address one or more of the problems of the prior art, whether referred to herein or otherwise.

### Statements of the Invention

In a first aspect, the present invention provides a cooking device comprising: at least one grill plate; an electric heater arranged to heat said grill plate; and a gas heater arranged to heat said grill plate.

By allowing a grill plate to be heated by an electric heater or a gas heater, either gas or electricity may be utilised as convenient. This greatly increases the versatility of the cooking device, as it may be used outdoors where there is no electricity supply, or indoors when it is cheapest and most convenient to use mains electricity. Having such a single cooking device that is able to use either fuel allows a single device to replace two devices (i.e. one powered by electricity, one powered by gas) thus lowering the overall cost for the consumer, as well as reducing the required storage space. The decrease in required storage space is particularly significant in limited space situations such as when caravanning.

Preferably, the device further comprises a heater control arranged to control the operation of both said electric heater and said gas heater.

Preferably, the device comprises a heater control that is arranged to prevent the electric heater and the gas heater being used to simultaneously heat said grill plate.

The heater control may comprise a mechanical shutter moveable between a first position and a second position, the mechanical shutter being arranged in the first position to prevent an electrical supply being connected to the electric heater, and in the second position to allow an electrical supply to be connected to the electric heater.

The heater control may comprise a mechanical shutter movable between a first position and a second position, and a gas control for controlling the operation of the gas heater, the mechanical shutter being arranged in the first position to allow operation of the gas control, and in the second position to prevent operation of the gas control.

The heater control may comprise a control knob moveable between a first position in which it is arranged to control the operation of the electric heater, and a second position in which it is arranged to control the operation of the gas heater.

The control knob may be moveable between the first and the second position by pushing or pulling the knob.

Suitably, movement of the knob between the first position and the second position may operate a switch, wherein when the knob in the first position the switch is arranged to make an electric circuit connecting the knob to the electric heater, and when the knob is in the second position the switch is arranged to break the electric circuit connecting the knob to the electric heater.

suitably, in the first position the knob may be arranged to engage a cam connecting the knob to an electric circuit for control of the electrical heater, and in the second position the knob may be arranged to engage a cam to connect the knob to control a gas supply for the gas heater.

Preferably, a portion of the grill plate can be removed.

Preferably, the removable portion of the grill plate is located above a gas heater arranged to heat the grill plate, the aperture being left once the portion has been removed being suitable for allowing a kettle to be heated on the gas heater.

Suitably, the removable portion may be at least one of: ridged on one surface and substantially smooth on the other surface.

Suitably, the majority of the surface of the grill plate may be ridged, with a portion of the surface being substantially smooth.

Preferably, the grill plate may have a ridged surface, the device may further comprise a cooking plate arranged to be placed on and in thermal contact with the grill plate, with the majority of the upper surface area of the plate being smooth.

Suitably, the smooth surface may be at least one of substantially flat; or recessed to accommodate one or more foodstuffs such as an egg.

In a further aspect, the present invention provides a method of manufacturing a cooking device, the method comprising the steps of: providing at least one grill plate; providing an electric heater in a suitable location so as to heat said grill plate; and providing a gas heater in a suitable location so as to heat said grill plate.

### Brief Description of the Drawings

For a better understanding of the invention, and to show how embodiments of the same may be carried into effect, reference will now be made, by way of example, to the accompanying diagrammatic drawings in which:
Figure 1 illustrates a conventional cooking device with a grill plate;
Figures 2A and 2B illustrate perspective views of a cooking device in accordance with a preferred embodiment of the present invention, with the fuel control mechanism in two alternative positions;
Figure 3 illustrates a perspective view of a cooking device in accordance with another embodiment of the present invention;
Figure 4 illustrates a perspective view of a cooking device in accordance with a further embodiment of the present invention; and
Figure 5 illustrates a perspective view of a cooking device with a portion of the grill plate cutaway in accordance with another embodiment of the present invention.

### Detailed Description of preferred Embodiments

The present inventors have realised that by arranging for a grill plate to be heatable by both gas and electricity, the cheapest and most convenient fuel supply can be utilised.

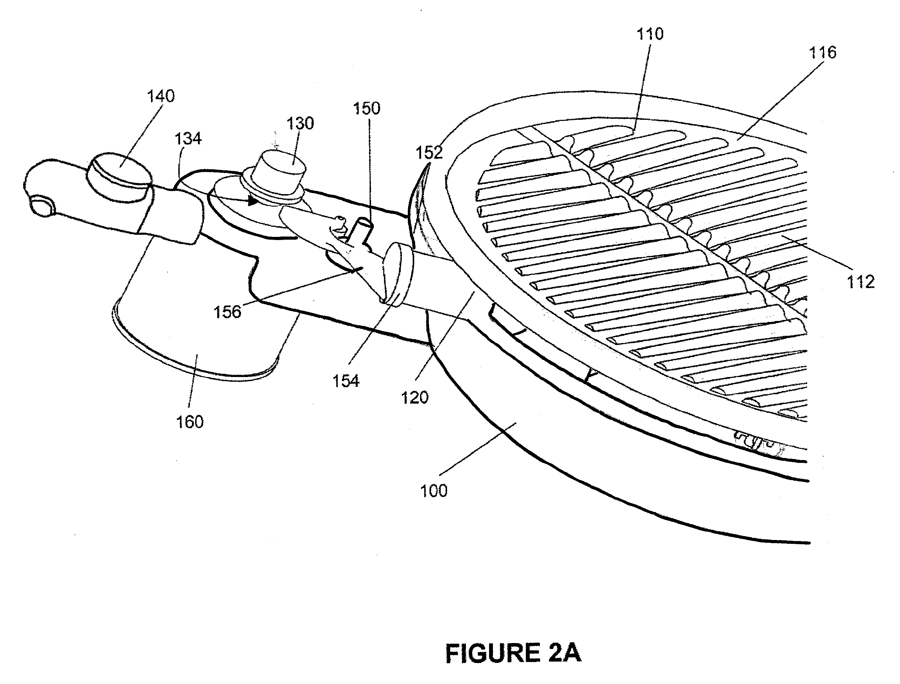

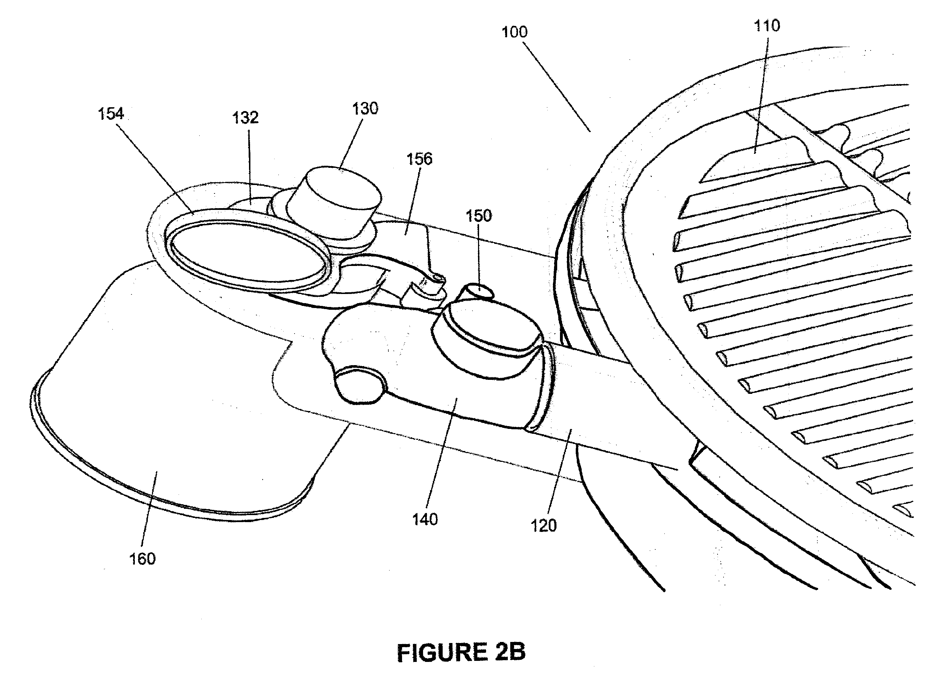

Figures 2A and 2B show perspective views of a cooking device 100 in accordance with a preferred embodiment of the present invention. The cooking device 100 comprises a grill plate 110. The grill plate has a series of ribs or ridges 112, to facilitate the draining of fat from foodstuffs cooked upon the grill plate 110. In the preferred embodiment, a gas heater in the form of a gas burner is located underneath the central portion of the grill plate 110. In this embodiment the gas heater is arranged to use a portable gas supply, such as a gas canister. The gas canister may contain LPG (Liquefied Petroleum Gases e.g. propane and butane). An electrical element in the form of an electrical heating element 116 is in thermal contact with the grill plate 110. In this particular embodiment, the heating element 116 extends substantially around the periphery of the grill plate, and forms an integral part of the grill plate.

The electrical heating element 116 is arranged to be powered by an external electricity supply. A plug 140 is connected to a power cord for connection to the external electricity supply. The plug 140 is arranged to be connected to a socket 120 so as to supply power to the electrical heating element 116.

In this particular embodiment, the heating of the grill plate 110 by the heating element 116 is controlled by a thermostat.

Gas is supplied to the gas burner from a gas canister 160. The supply of gas is controlled by a control knob 130. In order for the control knob to operate, the control knob must be first depressed, with any subsequent turning of the control knob acting to regulate the supply of gas from the gas canister to the burner. The control knob comprises a cylindrical body, with a flanged collar towards the base of the body. A small recess 134 exists underneath the control knob 130. The recess 134 corresponds to the allowable downward travel range of the knob. For the control knob to operate the gas supply, the control knob must be pressed downwards until the flanged collar contacts the surface on which the control knob is mounted.

A heater control is provided to prevent simultaneous heating of the grill plate 110 by both the gas and the electric heater. In this embodiment, the heater control takes the form of a pivotally mounted mechanical shutter 150. One end of the shutter 150 comprises a cap 154 arranged to fit over the electrical socket 120. The other end of the shutter 150 comprises a flange 156 arranged to fit into the recess 134 underneath the control knob 130. The pivotally mounted shutter is arranged to rotate between a first position (shown in Figure 2A) and a second position (shown in Figure 2B). In the first position, the cap 154 fits over and prevents electrical connection of the electricity supply to the socket 120. In the second position, the protruding flange 156 fits into the recess 134 and prevents the control knob being depressed (as shown in Figure 2B). Such a heater control allows only the operation of either the gas or the electrical heater. This, for instance, prevents gas being used from the gas canister unnecessarily when the grill plate 110 can be more conveniently and cheaply heated by the electrical power supply.

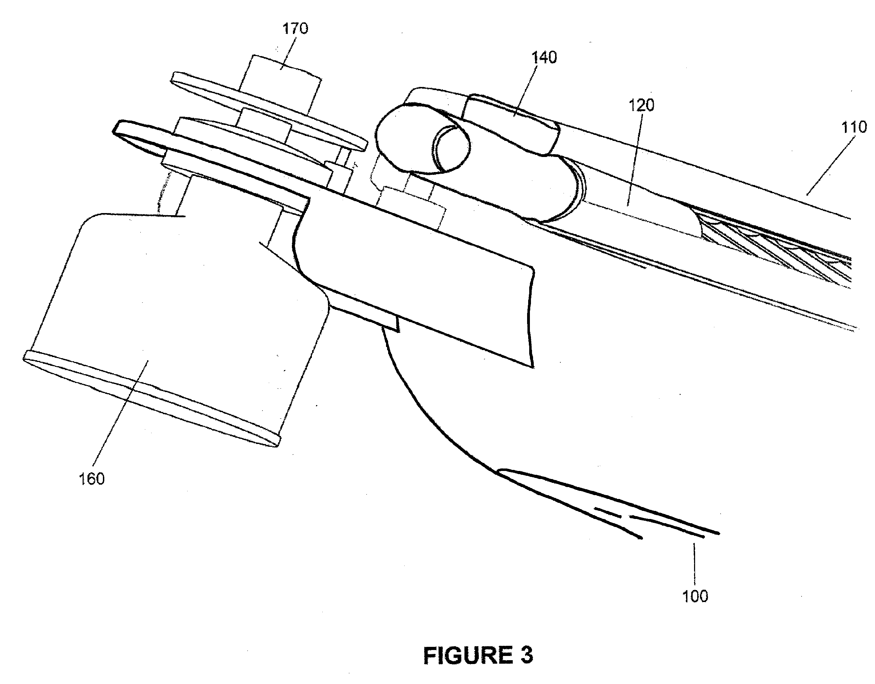

Figure 3 illustrates a cooking device 100 generally similar to that shown in Figures 2A and 2B, and similarly incorporating a gas heater and an electric heater. However, in this particular embodiment, a single heater control 170 is used to control the operation of both the gas heater and the electric heater. The heater control 170 again takes the form of a control knob, generally similar in appearance to that shown in Figures 2A and 2B. As per the control knob 130 shown in Figures 2A and 2B, the gas supply from the gas cylinder 160 to the gas heater is controlled by pressing the knob down, and turning the knob. The pressing down motion is needed to connect the gas supply to the gas heater (as is typical with gas control devices).

When the control knob 170 is not depressed, turning the control knob acts to regulate either a thermostat controlling the operation of the electrical heating element, or alternatively to directly regulate the power supplied to the electrical heating element. Pressing the control knob down is arranged to disconnect the control knob from controlling the electrical supply. This means that the control knob 170 is arranged to prevent the electric heater and the gas heater being used to simultaneously heat the grill plate.

The control knob 170 may be attached to an electrical switch (e.g. a micro switch) arranged to make a connection between the control knob and the relevant electrical circuit when the knob is in raised position, and to break the connection between the control knob and the electrical circuit when the knob is depressed. The normal mechanical operation of a gas control knob can be used when the knob is depressed.

Alternatively, a cam arrangement can be used. In the raised position, the control knob 170 connects to a cam arranged to control the electrical circuit. When a control knob is depressed, it disengages from the electrical cam and instead engages with a gas cam, arranged to connect the control knob so as to control the gas flow from a gas supply to the gas burner.

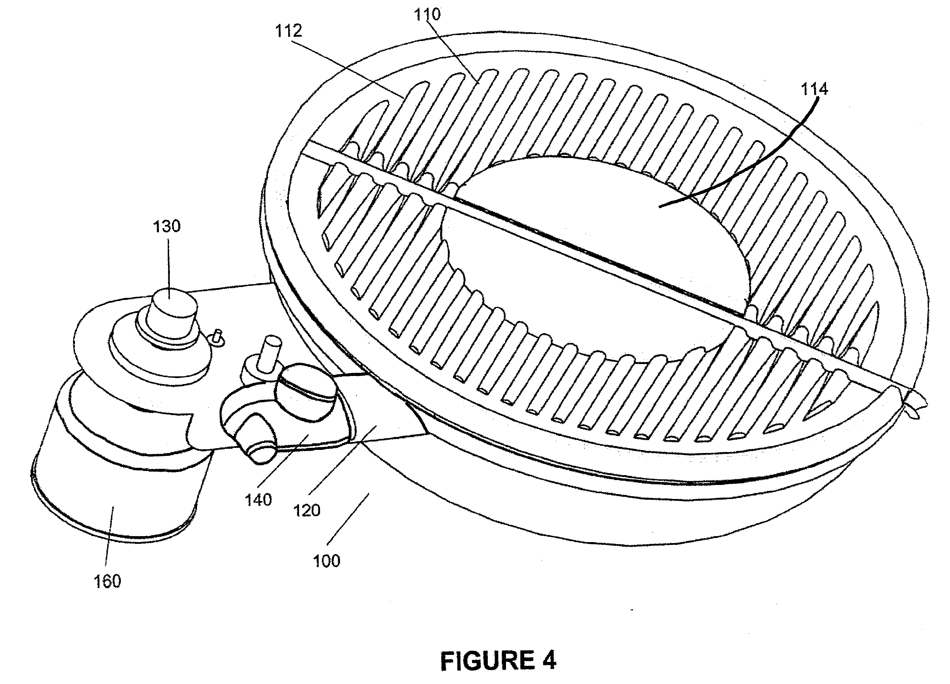

Figure 4 shows an alternative dual fuel cooking device 100 in accordance with another embodiment of the present invention. The cooking device 100 is generally similar to that shown in Figure 3. However, in this particular device, the grill plate is formed in two portions. A portion 114 of the grill plate is arranged to be removable. This is the portion of the grill plate that overlies the gas burner.

When the portion 114 is removed, the remaining portion of the grill plate 110 defines an aperture, allowing a kettle to be placed over (or into) the aperture, so as to be heated by the gas burner.

In this particular embodiment, the cooking device has the same heater control 170 as that shown in Figure 3. However, in other embodiments it will be appreciated that heater control(s) may be provided that allow the simultaneous use of the gas heater and the electric heater. This would, for instance, allow the gas heater to heat a kettle (or a pan) placed over the aperture in the grill plate 110 once the removable portion 114 has been removed. At the same time, the remainder of the grill plate 110 could be heated by the electric heater, for cooking of foodstuffs upon the grill plate.

In the particular embodiment shown in Figure 4, the majority of the surface area of the grill plate is ridged i.e. it has a series of ribs or ridges arranged to facilitate the run off of fat and grease from foodstuffs being cooked.

The removable portion 114 is reversible. It has two different shaped surfaces. One surface is ridged, as per the remainder of the grill plate 110. The other surface (the surface shown uppermost in Figure 4) is smooth, so as to facilitate the heating or cooking of foodstuffs in which it is desirable to have a relatively large portion of the food stuff in contact with the heated surface. For instance, eggs could be fried upon this smooth surface. The smooth surface could be completely flat, or alternatively slightly recessed (or provided with a plurality of recesses) to facilitate the positioning of such foodstuffs.

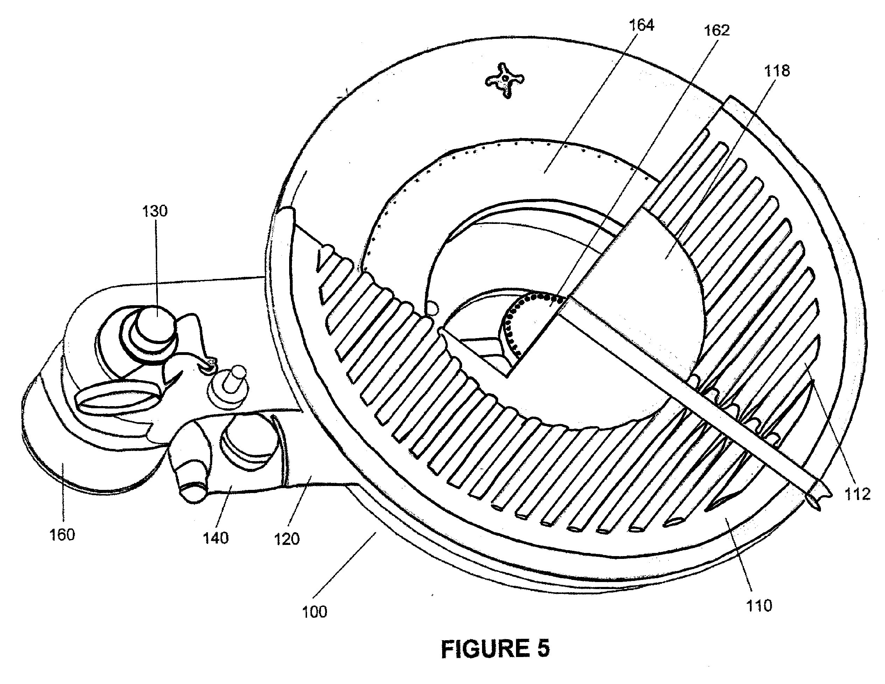

Figure 5 shows yet a further embodiment of a cooking device 100 in accordance with the present invention. The cooking device 100 is substantially the same as that shown in Figures 2A and 2B. In this particular embodiment, a smooth cooking plate 118 is arranged to be placed on and in thermal contact with the grill so as to provide a smooth cooking surface. The lower surface of the cooking plate 118 is preferably arranged to mate with the grill plate surface i.e. recesses are provided in the lower surface of the cooking plate 118 to mate with the ridges in the grill plate, so as to ensure good thermal contact between the grill plate and the cooking plate 118.

Further, in this particular embodiment, a first gas burner 162 is provided, along with a second gas burner 164. The first gas burner 162 is mounted so as to heat the centre of the grill plate 110. The second gas burner is arranged to heat the periphery of the grill plate 110. In this particular embodiment, a single control knob 130 is used to simultaneously control both burners 162, 164, and to ensure that both burners provide heat to the grill plate 110 so as to provide uniform heat across the grill plate.

It will be appreciated that any number of gas or electric heaters may be used to heat a grill plate in accordance with embodiments of the present invention. Further, cooking devices in accordance with embodiments of the present invention can comprise any number of grill plates.

Gas canisters can be connected directly to the gas heater, or can be connected to the gas heater via a pipe e.g. a flexible gas pipe.

Multiple heaters can be used in different configurations to provide heat to one or more grill plates, or to different portions of a single grill plate. Each heater may be controlled separately if desired. For instance, if a rectangular grill plate was utilised instead of the circular grill plate shown in the Figures, separate gas heaters can be used to heat different portions of the grill plate, with each separate gas burner being independently controllable so as to allow different areas of the plate to be heated to different temperatures. Electrical heaters may be configured in a similar manner.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A cooking device (100) comprising:
at least one grill plate (110);
an electric heater (116) arranged to heat said grill plate; and
a gas heater (162) arranged to heat said grill plate.

2. A device as claimed in claim 1, further comprising a heater control (170) arranged to control the operation of both said electric heater and said gas heater.

3. A device as claimed in claim 1 or claim 2, the device comprising a heater control (170, 150) that is arranged to prevent the electric heater (116) and the gas heater (162) being used to simultaneously heat said grill plate.

4. A device as claimed in claim 3, wherein said heater control (150) comprises a mechanical shutter (154) moveable between a first position and a second position, the mechanical shutter being arranged in the first position to prevent an electrical supply being connected to the electric heater, and in the second position to allow an electrical supply to be connected to the electric heater.

5. A device as claimed in claim 3 or claim 4, wherein said heater control (150, 130) comprises a mechanical shutter (156) movable between a first position and a second position, and a gas control (130) for controlling the operation of the gas heater, the mechanical shutter (156) being arranged in the first position to allow operation of the gas control, and in the second position to prevent operation of the gas control.

6. A device as claimed in any one of the above claims, wherein the heater control (170, 150) comprises a control knob (130) moveable between a first position in which it is arranged to control the operation of the electric heater (116), and a second position in which it is arranged to control the operation of the gas heater (162).

7. A device as claimed in claim 6, wherein said control knob (170) is moveable between the first and the second position by pushing or pulling the knob.

8. A device as claimed in claim 6 or claim 7, wherein movement of the knob (170) between the first position and the second position operates a switch, and wherein when the knob is in the first position the switch is arranged to make an electric circuit connecting the knob to the electric heater (116), and when the knob is in the second position the switch is arranged to break the electric circuit connecting the knob to the electric heater.

9. A device as claimed in any one of claims 6 to 8, wherein in the first position the knob (170) is arranged to engage a cam connecting the knob (170) to an electric circuit for control of the electrical heater (116), and in the second position the knob (170) is arranged to engage a cam to connect the knob to control a gas supply (160) for the gas heater (162).

10. A device as claimed in any one of the above claims, wherein a portion (114) of the grill plate (110) can be removed.

11. A device as claimed in claim 10, wherein the removable portion (114) of the grill plate is located above a gas heater (162) arranged to heat the grill plate, the aperture being left once the portion (114) has been removed being suitable for allowing a kettle to be heated on the gas heater (162).

12. A device as claimed in claim 10 or claim 11, wherein the removable portion (114) is at least one of: ridged on one surface and substantially smooth on the other surface.

13. A device as claimed in any one of the above claims, wherein the majority of the surface of the grill plate is ridged, with a portion (114) of the surface being substantially smooth.

14. A device as claimed in any one of the above claims, wherein the grill plate (110) has a ridged surface (112), the device further comprising a cooking plate (118) arranged to be placed on and in thermal contact with the grill plate, with the majority of the upper surface area of the plate being smooth.

15. A device as claimed in any one of the claims 12 to 14, wherein the smooth surface is at least one of substantially flat; or recessed to accommodate one or more foodstuffs such as an egg.

16. A method of manufacturing a cooking device, the method comprising the steps of:
providing at least one grill plate (110);
providing an electric heater (116) in a suitable location so as to heat said grill plate;
and providing a gas heater (162) in a suitable location so as to heat said grill plate.
